# EUROPEAN PATENT SPECIFICATION

(11) **EP 4 224 009 B1**
(45) Date of publication and mention of the grant of the patent: **16.09.2026**
(21) Application number: 22155413.2
(22) Date of filing: 07.02.2022
(51) Int. Cl.: F03D 1/06, F03D 7/02

(54) **BLADE SEGMENT FOR A ROTOR BLADE OF A WIND TURBINE**
SCHAUFELSEGMENT FÜR EINE ROTORSCHAUFEL EINER WINDTURBINE
SEGMENT D'UNE PALE DE ROTOR D'ÉOLIENNE

(43) Date of publication of application: 09.08.2023
(73) Proprietor: LM Wind Power A/S, 6000 Kolding (DK)
(72) Inventor: Scholte-Wassink, Hartmut, 48499 Salzbergen (DE)
(74) Representative: Zimmermann & Partner Patentanwälte mbB

(56) References cited:
- US-A1- 2010 254 813
- US-B2- 10 988 351
- US-B2- 11 118 574

## Description

### FIELD

The present disclosure relates generally to wind turbines, and more particularly to a blade segment for a rotor blade of a wind turbine.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

The size of rotor blades contributes to the energy efficiency of wind turbines. In particular, an increase in rotor blade size can increase the energy production of a wind turbine. The economic benefits of increased wind turbine sizes or rotor blade sizes must be weighed against respective costs of manufacturing, transporting, assembly or repair of the wind turbines. One strategy for reducing the costs of pre-forming, transporting, and erecting wind turbines having rotor blades of increasing sizes is to manufacture the rotor blades in blade segments. The blade segments may be assembled to form the rotor blade after, for example, the individual blade segments are transported to an erection location. US 11 118 574 B2 relates to a method for installing a first section of a jointed rotor blade to a second section of the jointed rotor blade installed on a hub of a wind turbine. A lifting line may be coupled to the first section via a quick disconnect, which may be remotely actuatable. The method includes aligning internal support structures of the first and second sections together at a chordwise joint and coupling the first section to the second section at the chordwise joint.

Over time, the rotor blades may become worn or damaged due to loads and forces from the wind acting on the blades. The repair of the blades can be very time-consuming and labor intensive. Often, cranes are needed to grip the blades and lower the blades from a rotor hub of a wind turbine to the ground such that the rotor blades can be replaced, or such that maintenance or repair of the blades can be performed on the ground or at a maintenance station. Alternatively, maintenance can be performed on the mounted rotor blade by personnel lifted to the blade or personnel climbing the wind turbine. However, the use of cranes and/or personnel can increase risks for personnel at or below the rotor blade, or costs associated with the aforementioned repair or replacement procedures.

Accordingly, the present disclosure is directed to a blade segment for a rotor blade that can provide a safe, fast and/or cost-efficient repair, maintenance or exchange of rotor blade segments.

### BRIEF DESCRIPTION

Aspects and advantages of the invention will be set forth in part in the following description, or may be obvious from the description, or may be learned through practice of the invention.

In one aspect, the present disclosure is directed to blade segment for a rotor blade of a wind turbine. The blade segment includes a first joint portion configured to be joined to a second joint portion of a further blade segment. The blade segment further includes a blade joining system comprising a joining device for mechanically connecting the first joint portion and the second joint portion, the joining device being remotely operable such that the joining device mechanically connects the first j oint portion and the second j oint portion for joining the blade segment and the further blade segment. It should be understood that the blade segment may further include any of the features as described herein.

In another aspect, the present disclosure is directed to a rotor blade for a wind turbine. The rotor blade has at least two blade segments. The at least two blade segments include the blade segment according to embodiments described herein. The at least two blade segments further include the further blade segment, the further blade segment including the second joint portion, the second j oint portion being configured to be joined to the first joint portion of the blade segment. It should be understood that the rotor blade may further include any of the additional features as described herein.

In yet another aspect, the present disclosure is directed to a wind turbine. The wind turbine includes a rotor, the rotor including a rotor hub. The wind turbine further includes at least one rotor blade according to embodiments described herein, the rotor blade being connected to the rotor hub. It should be understood that the wind turbine may further include any of the additional features as described herein. In a further aspect, the present disclosure is directed to a method of assembling or disassembling a rotor blade according to embodiments described herein. The method includes connecting the first joint portion and the second joint portion by remotely operating the joining device, or releasing the second joint portion from the first joint portion by remotely operating the joining device. It should be understood that the method may further include any of the additional steps and/or features as described herein.

These and other features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine;
FIG. 2 illustrates a simplified, internal view of a nacelle of a wind turbine, particularly illustrating the nacelle during normal operation;
FIG. 3 illustrates a sectional view of a rotor blade according to embodiments of the present disclosure;
FIGS. 4A, 4B and 4C illustrate sectional views of a blade segment and of a further blade segment during the assembly of a rotor blade according to exemplary embodiments;
FIG. 5 illustrates a sectional view of a rotor blade according to further embodiments of the disclosure;
FIG. 6 illustrates a view of a wind turbine during raising or lowering of a further blade segment according to embodiments described herein;
FIG. 7 illustrates a flow diagram according to embodiments of a method of disassembling a rotor blade; and
FIG. 8 illustrates a flow diagram according to embodiments of a method of assembling a rotor blade; and
FIG. 9 illustrates a flow diagram of a method of replacing a further blade segment of a rotor blade, the rotor blade including a blade segment and the further blade segment.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the appended claims.

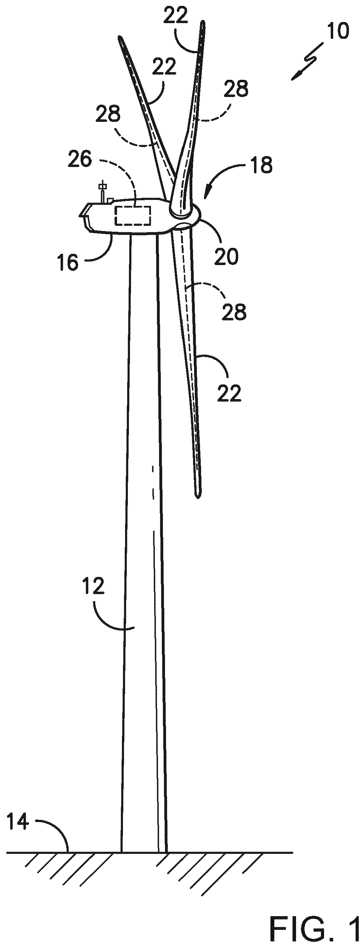

Referring now to the drawings, FIG. 1 illustrates a perspective view of a wind turbine 10 according to the present disclosure. As shown, the wind turbine 10 generally includes a tower 12 extending from a support surface 14 (herein also referred to as ground), a nacelle 16 mounted on the tower 12, and a rotor 18 coupled to the nacelle 16.

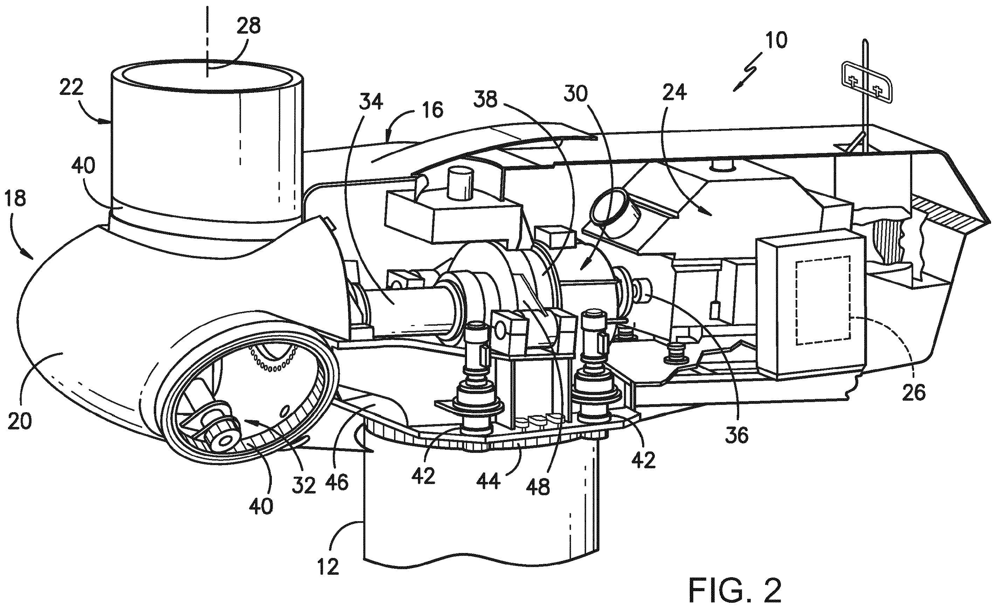

As shown in FIG. 1, the rotor 18 includes a rotatable rotor hub 20 and at least one rotor blade 22 coupled to and extending outwardly from the rotor hub 20. For example, in the illustrated embodiment, the rotor 18 includes three rotor blades 22. However, in an alternative embodiment, the rotor 18 may include more or less than three rotor blades 22. Each rotor blade 22 may be spaced about the rotor hub 20 to facilitate rotating the rotor 18 to enable kinetic energy to be transferred from the wind into usable mechanical energy, and subsequently, electrical energy. For instance, the rotor hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the components. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals.

Referring now to FIG. 2, a simplified, internal view of the nacelle 16 of the wind turbine 10 shown in FIG. 1, particularly illustrating the drivetrain components thereof, is illustrated. More specifically, as shown, the generator 24 may be coupled to the rotor 18 for producing electrical power from the rotational energy generated by the rotor 18. The rotor 18 may be coupled to the main shaft 34, which is rotatable via a main bearing (not shown). The main shaft 34 may, in turn, be rotatably coupled to a gearbox output shaft 36 of the generator 24 through a gearbox 30. The gearbox 30 may include a gearbox housing 38 that is connected to the bedplate 46 by one or more torque arms 48. More specifically, in certain embodiments, the bedplate 46 may be a forged component in which the main bearing (not shown) is seated and through which the main shaft 34 extends. As is generally understood, the main shaft 34 provides a low speed, high torque input to the gearbox 30 in response to rotation of the rotor blades 22 and the rotor hub 20. Thus, the gearbox 30 converts the low speed, high torque input to a high speed, low torque output to drive the gearbox output shaft 36 and, thus, the generator 24.

Each rotor blade 22 may also include a pitch adjustment mechanism 32 configured to rotate each rotor blade 22 about its pitch axis 28 via a pitch bearing 40. Similarly, the wind turbine 10 may include one or more yaw drive mechanisms 42 communicatively coupled to the controller 26, with each yaw drive mechanism(s) 42 being configured to change the angle of the nacelle 16 relative to the wind (e.g., by engaging a yaw bearing 44 of the wind turbine 10).

During operation of the wind turbine 10, the rotor blades 22 may become worn or damaged due to loads and forces from the wind acting on the rotor blades 22. In particular, the blade tips of the rotor blades 22 or parts of the rotor blades 22 near the blade tips may be subject to high speeds and wear. The rotor blades 22 may be replaced or may be serviced, e.g., by grinding and re-painting the rotor blades 22. However, often blade-lifting cranes are used to raise the blades up to the rotor hub 20 or lower the blades down from the rotor hub 20. Even for segmented rotor blades 22, often the whole rotor blade 22 is removed for servicing or repair. In particular, the location of the joint between a blade segment mounted to the rotor hub and a further blade segment is difficult to access. Connecting a further blade segment, e.g., a tip segment, to a blade segment already mounted to the rotor hub, or removing said further blade segment may include lifting personnel to the location of the joint, where the personnel would have to carry out the challenging operation of connecting or disconnecting the further blade segment. This operation includes several risks such as risks of falling, risks from falling objects, risks due to vibrations of the blade segments due to wind, particularly vibrations of a tip segment, or risks due to the high forces acting on the blade segments caused by wind. The operation may further incur costs due to high wind speed waiting times or crane costs due to man basket operation or costs for rope climbers. As such, the present disclosure is directed to a blade segment, a rotor blade, a wind turbine and a method for a safe, fast and/or cost efficient repair, maintenance or exchange of rotor blade segments, particularly of tip segments.

According to embodiments of the present disclosure, a rotor blade 22 includes at least two blade segments, particularly exactly two. In some embodiments, the rotor blade 22 can include more than two blade segments, for example exactly three blade segments or exactly four blade segments. The at least two blade segments include a blade segment 60 and a further blade segment 70. The further blade segment 70 can be joined to the blade segment 60 such that the further blade segment 70 extends from the blade segment 60 towards a blade tip 54 of the rotor blade 22. The rotor blade 22 can extend along the pitch axis 28 from a root 56 of the rotor blade 22 to the blade tip 54 of the rotor blade 22. Embodiments of the present disclosure may be directed to a set of at least two blade segments for assembling a rotor blade 22, the set including a blade segment 60 and a further blade segment 70 according to embodiments described herein.

In embodiments, the blade segment 60 is a root segment of the rotor blade 22. In particular, the blade segment 60 can include the root 56 of the rotor blade 22. In embodiments, the blade segment 60 is connected or is configured to be connected to the rotor hub 20. For example, the root 56 can be connected to a pitch bearing 40 of the rotor hub 20 (FIG. 2). In further embodiments, the blade segment 60 may be joined in a direction towards the root to a root-side blade segment and in a direction towards the blade tip to the further blade segment.

In some embodiments, the further blade segment 70 is a tip segment including the blade tip 54. In further embodiments, the further blade segment 70 may be an intermediate blade segment extending between the blade segment 60 and an additional blade segment, the additional blade segment being connectable to the further blade segment at the opposite end of the blade segment 60.

In embodiments, which can be combined with other embodiments, the blade segment 60 can have a length of more than 40 m, particularly more than 50 m or more than 60 m, and/or less than 130 m, particularly less than 100 m or less than 90 m. The further blade segment 70 may have a length of more than 5 m, particularly more than 7 m or more than 10 m and/or less than 40 m, particularly less than 30 m or less than 20 m. The further blade segment 70 may have a weight of more than 200 kg, particularly more than 400 kg or more than 600 kg, and/or less than 3000 kg, particularly less than 2000 kg or less than 1000 kg, for example about 800 kg.

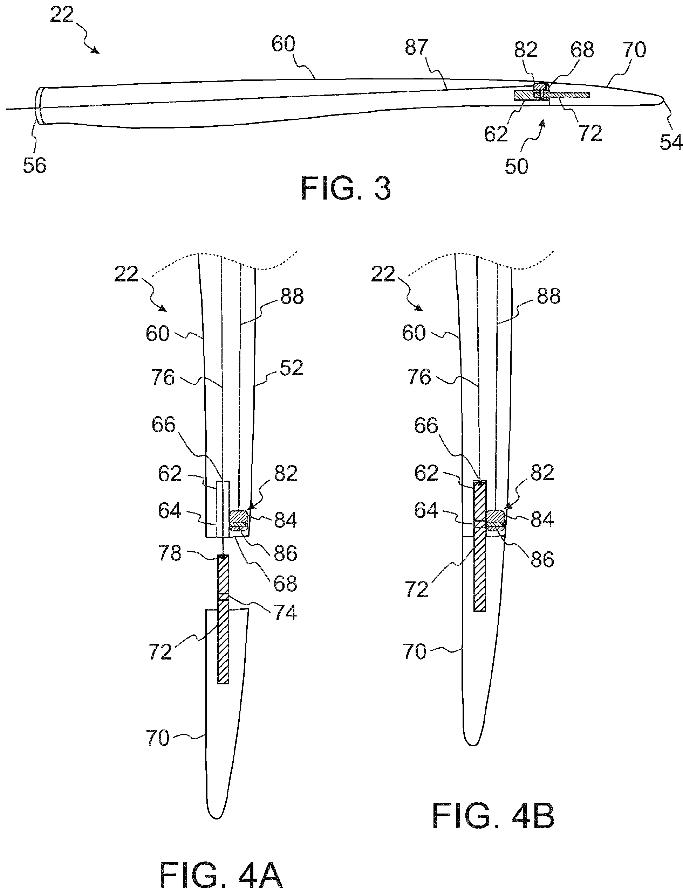

FIG. 3 illustrates a sectional view of a rotor blade 22 with a blade segment 60 and a further blade segment 70 according to embodiments described herein. The blade segment 60 includes the root 56 of the rotor blade 22 and extends to the further blade segment 70. At an extension end 68 of the blade segment 70 opposite the root 56, the further blade segment 70 is joined to the blade segment 60 via a joint 50. The further blade segment 70 is a tip segment and includes the blade tip 54.

According to embodiments of the present disclosure, the blade segment 60 includes a first j oint portion 62 configured to be joined to a second j oint portion 72 of the further blade segment 70. The first joint portion 62 can be arranged at an extension end 68 of the blade segment 60 opposite the root 56. In embodiments, the blade segment 60 further includes a blade joining system for joining the first joint portion 62 and the second joint portion 72. The blade joining system particularly includes a joining device 82 for mechanically connecting the first joint portion 62 and the second joint portion 72. Mechanically connecting the first joint portion 62 and the second j oint portion 72 may include mechanically interlocking the first j oint portion 62 and the second joint portion 72. In embodiments, the joining device 82 is arranged at the first joint portion 62. In particular, the joining device 82 may be connected to the first joint portion 62.

In embodiments, the joint 50 of the blade segment 60 and the further blade segment 70 includes the first joint portion 62 of the blade segment 60, the second joint portion 72 of the further blade segment 70, and the joining device 82 of the blade joining system. The joint 50 can provide a mechanical connection between the blade segment 60 and the further blade segment 70. The mechanical connection may be configured to provide the connection between the blade segment 60 and the further blade segment 70 during normal operation of the wind turbine 10. In embodiments, the joint 50 is releasable such that the further blade segment 70 can be removed from the blade segment 60. In particular, the joint 50 may be releasable without breaking a bonded connection between the blade segment 60 and the further blade segment 70.

For instance, the joint 50 of rotor blade 22 in FIG. 3 includes a first joint portion 62 of the blade segment 60 and a second joint portion 72 of the further blade segment 70. The second joint portion 72 engages the first joint portion 62 and is locked in position by a joining device 82 of a blade joining system of the blade segment 60.

According to embodiments, the joining device 82 is remotely operable. In particular, the joining device 82 may be remotely operable from outside a joint region of the blade segment 60, the joint region including the first joint portion 62 and the joining device 82. In particular, the joining device 82 may be remotely operable from outside a region including the first joint portion 62, the second joint portion 72 and the joining device 82. In some embodiments, the joining device 82 may be remotely operable from outside an airfoil region of the blade segment 60, or from outside an airfoil region of the rotor blade 22. In further embodiments, the joining device 82 may be remotely operable from outside the blade segment 60 or from outside the rotor blade 22. For example, the joining device 82 may be remotely operable from a root 56 of the blade segment 60 or from the rotor hub 20. In further embodiments, the joining device 82 may be remotely operable from outside the wind turbine 10, e.g., from the support surface 14 around the wind turbine 10.

In embodiments, the joining device 82 is remotely operable such that the joining device 82 mechanically connects the first joint portion 62 and the second joint portion 72 for joining the blade segment 60 and the further blade segment 70. The joining device 82 may be remotely operable such that the joining device 82 releases the second joint portion 72 from the first joint portion 62 for releasing the further blade segment 70 from the blade segment 60.

In some embodiments, the blade joining system includes a remote operation line 87 connected to the joining device 82. The joining device 82 may be remotely operable via the remote operation line 87. The remote operation line 87 may extend in a longitudinal direction of the blade segment 60, for example from the joining device 82 to a root 56 of the blade segment 60 or further out of the root 56. For example, in FIG. 3 the remote operation line 87 extends from the joining device 82 along the longitudinal axis of the blade segment 60 and through the root 56 into the rotor hub 20 (not shown).

According to embodiments, the joining device 82 includes an actuator 84 and a fastening device 86, the actuator 84 being configured for actuating the fastening device 86 for connecting the first joint portion 62 and the second joint portion 72 and/or for releasing the second joint portion 72 from the first joint portion 62. In particular, the actuator 84 may be configured for actuating the fastening device 86 from a released state to a locked state to connect the first joint portion 62 and the second joint portion 72. The actuator 84 may be configured for actuating the fastening device 86 from a locked state to a released state to release the second joint portion 72 from the first joint portion 62. The locked state and the released state of the fastening device 86 may for example be defined by distinct positions and/or orientations of the fastening device 86. For instance, the actuator 84 may be configured for inserting the fastening device into or through the first joint portion 62 and/or into or through the second joint portion 72.

According to some embodiments, the actuator 84 includes at least one of a hydraulic actuator, a pneumatic actuator, an electric actuator or a mechanical actuator. For example, a hydraulic actuator may include a hydraulic cylinder. An electric actuator or electromechanical actuator may include, e.g., a spindle drive. A mechanical actuator may include, for instance, a spring load actuator, a mechanical lock actuator or Bowden cable actuator. In embodiments, the fastening device 86 of the joining device 82 may be or include a pin or a bolt. In some embodiments, the actuator 84 may be configured for actuating the fastening device 86 in a direction oblique to the longitudinal axis of the blade segment 60 or in an at least substantially chordwise direction.

In some embodiments, the blade joining system comprises an actuator line 88 connected to the actuator 84, the actuator line 88 being configured for transmitting actuation energy to the actuator 84 for actuating the fastening device 86. The actuator line 88 may be a remote operation line 87 as described herein. In particular, the joining device 82, particularly the actuator 84 of the joining device 82, may be remotely operable via the actuator line 88. The actuator line 88 may extend along at least a portion of the length of the blade segment 60, e.g., along at least 70% of the length of the blade segment 60, particularly along at least 90% or along the full length of the blade segment 60. In embodiments, the actuator line 88 extends along a longitudinal axis of the blade segment 60 from the actuator 84 at least to the root 56 of the blade segment 60. The actuator line 88 may be accessible within the root 56 or from the rotor hub 20. In some embodiments, the actuator line 88 may extend further out of the root 56, e.g., into a rotor hub 20.

According to embodiments, the actuator line88 may be configured for transmitting actuation energy by transmitting a mechanical force. For example, the actuator line 88 may include a Bowden cable, particularly for operation of a Bowden cable actuator, or another cable, rope or chain. In some embodiments, the actuator line 88 may include an electrical line. The electrical line may be configured for transmitting electrical energy, the electrical line including, e.g., a conductive wire, particularly for operating an electrical actuator. In embodiments, the actuator line 88 may be configured for transmitting actuation energy by transmitting a hydraulic force, particularly for operating a hydraulic actuator, or a pneumatic force, particularly for operating a pneumatic actuator. For instance, the actuator line may include a tube, particularly a gas-filled tube for pneumatic actuation or a liquid-filled tube for hydraulic actuation. The tube may be a metal tube, e.g. a copper tube. In further embodiments, the tube may be made from a synthetic material.

In some embodiments, the actuator 84 may include an actuator controller. The actuator controller may be configured to receive one or more actuation signals, for example via the actuator line 88 or via a communication line. The communication line may be arranged together with the actuator line 88. In further embodiments, the actuation signal may be sent wirelessly to the actuator controller. Remotely operating the joining device 82 may include sending an actuation signal to the actuator controller. Upon receiving an actuation signal, the actuator controller may cause the actuator 84 to actuate the fastening device 86, e.g., from a locked state to a released state or vice versa. In further embodiments, the actuator 84 may be remotely operable directly via the actuator line 88, e.g. by applying a force via the actuator line 88 according to embodiments described herein.

In embodiments, one of the first j oint portion 62 and the second joint portion 72 may include at least one structural member, e.g. a beam extending in a longitudinal direction of the rotor blade 22. The structural member may be configured for supporting at least the weight of the further blade segment 70. The other one of the first j oint portion 62 and the second j oint portion 72 may include at least one receptacle, the receptacle particularly being configured to receive the structural member. The structural member may be configured to be inserted into the receptacle. The structural member may engage the receptacle when inserted into the receptacle. The structural member and the receptacle may be configured to be joined by the fastening device 86. In some embodiments, the first joint portion 62 may include or consist of the at least one receptacle and the second joint portion 72 may include or consist of the at least one structural member. The joining device 82, particularly the actuator 84, may be arranged at or may be connected to the receptacle of the first joint portion 62. In embodiments, the joining device 82 may be arranged axially offset from the extension end 68 of the blade segment 60, for example axially offset in a direction towards the root 56. In further embodiments, the joining device 82 may be arranged at the extension end 68.

In some embodiments, the first joint portion 62 includes at least one first aperture 64 and/or the second joint portion 72 includes at least one second aperture 74. The at least one first aperture 64 and/or the at least one second aperture 74 may be configured for receiving the fastening device 86. Each of the at least one first aperture 64 and/or the at least one second aperture 74 may include a hole, e.g. a through-hole or a blind hole. In particular, the one or more holes may include pinholes and the fastening device may include one or more pins. For example, the joint 50 of the rotor blade 22 may be a pin joint including a pin as a fastening device 86 and pinholes as one or more first apertures 64 in the first joint portion 62 and pinholes as one or more second apertures 74 in the second joint portion 72. In particular, the at least one first aperture 64 and/or the at least one second aperture 74 may be axially co-localized, when the further blade segment 70 is positioned relatively to the blade segment 60 in a position for joining the first j oint portion 62 and the second joint portion 72.

In embodiments, the actuator 84 is configured for inserting the fastening device 86 into the at least one first aperture 64 of the first joint portion 62 and/or into the at least one second aperture 74 of the second joint portion 72, particularly to connect the first joint portion 62 and the second j oint portion 72 when the first joint portion 62 and the second joint portion 72 are in a relative position to be joined. The actuator 82 may be configured for removing or retracting the fastening device 86 from the at least one first aperture 64 and/or the at least one second aperture 74 to release the second joint portion 72 from first joint portion 62.

For example, FIGS. 4A to 4C illustrate a rotor blade 22 with a blade segment 60 and a further blade segment 70 according to embodiments of the present disclosure. In FIG. 4A, the blade segment 60 and the further blade segment 70 are shown before joining. The blade segment 60 includes a first joint portion 62 at an extension end 68 of the blade segment 60, the first joint portion 62 including a receptacle. The second joint portion 72 of the further blade segment 70 includes a structural member, specifically a beam, to be received by the receptacle of the first joint portion 62, as illustrated in FIG. 4B. The blade segment 60 includes a blade joining system including a joining device 82, the joining device 82 including an actuator 84 and a fastening device 86, more specifically a pin. The actuator 84 is configured for actuating the fastening device 86 in a chordwise direction. In FIGS. 4A and 4B, the fastening device 84 is retracted to a released state such that the structural member of the second joint portion 72 can be inserted into the receptacle of the first joint portion 62 (FIG. 4B).

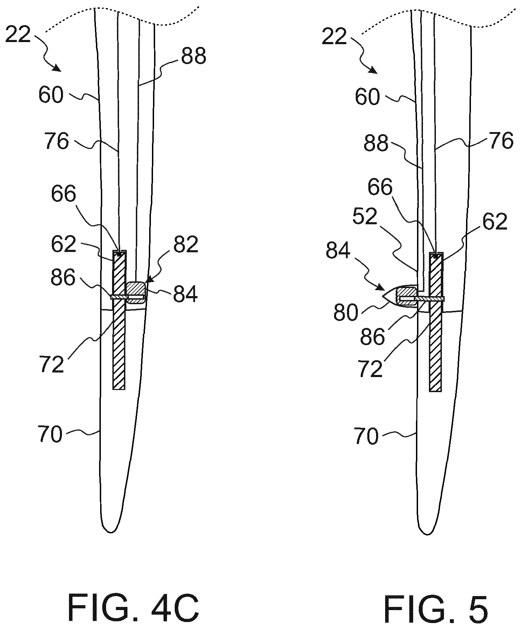

Once the second joint portion 72 is in position to be joined to the first joint portion 62, the actuator 84 is remotely operated via an actuator line 88 of the blade joining system to connect the first joint portion 62 and the second joint portion 72. In particular, actuation energy is transmitted through the actuator line 88 to the actuator 84, which actuates the fastening device 86 from the released state to a locked state, in which the fastening device 86 is positioned through first apertures 64 of the first joint portion 62 and through a second aperture 74 of the second joint portion 72. FIG. 4C shows the fastening device 86 in the locked state, in which the first joint portion 62 and the second joint portion 72 are mechanically connected, and the blade segment 60 and the further blade segment 70 are joined. In particular, joining the blade segment 60 and the further blade segment 70 can be achieved without intervention of personnel in the joint region of the rotor blade 22, but by remote operation of the joining device 82 from outside the joint region, specifically via the actuator line 88.

In some embodiments according to the present disclosure, the actuator 84 is arranged at least partially within an outer shell 52 of the blade segment 60, particularly fully within the outer shell 52. For example, FIGS. 4A to 4C show the actuator 84 arranged fully within the outer shell. In further embodiments, the actuator 84 is arranged at least partially or fully outside the outer shell 52 of the blade segment. In particular, the actuator may be installed onto the outer shell 52 of the blade segment 60. The actuator 84 may include an actuator housing 80 mounted onto the outer shell 52 of the blade segment 60. In particular, the actuator housing 80 may be an aerodynamic housing or aerodynamic cover of the actuator 80. For example, FIG. 5 shows a rotor blade 22 similar to FIG. 4C, but with the actuator 84 mounted onto the outer shell 52 of the blade segment 60. In particular, the actuator 84 has an actuator housing 84, specifically an aerodynamic cover to avoid or reduce an aerodynamic drag of the actuator 84.

In some embodiments of the present disclosure, the further blade segment 70 includes an attachment point 78 for fastening a connecting device 76 to the further blade segment 70. The connecting device 76 may be or may include for example a rope such as a synthetic rope, e.g., a Nylon rope, or a wire rope, e.g., a steel rope. The connecting device 76 may be or may include a wire or a chain. In some embodiments, the attachment point 78 may be arranged on the second joint portion 72, for example on a structural member of the second joint portion 72. The blade segment 60 may be configured such that the connecting device 76 can extend through the blade segment 60 in a longitudinal direction, particularly through the blade segment 60 along the entire length of the blade segment 60. For example, the blade segment 60 may include an opening 66 at the joint 50, e.g., at the extension end 68 of the blade segment 60. The opening 66 may be arranged in the first joint portion 62, e.g. in a receptacle of the first joint portion. The connecting device 76 may be used to raise the further blade segment 70 to the extension end 68 of the blade segment 60, or to lower the further blade segment 70 from the blade segment 60, particularly to raise or lower the further blade segment 70 while the blade segment 60 is already or remains mounted to the rotor hub 20. In embodiments, the connecting device 76 may remain in the rotor blade 22 after joining the further blade segment 70 to the blade segment 60. In particular, the connecting device 76 may remain in the assembled rotor blade 22.

For instance, FIG. 4A illustrates the blade segment 60 being connected to the rotor hub 20 (not shown), with a connecting device 76 extending through an opening 66 in the first joint portion and further through the entire blade segment 60 in a longitudinal direction of the blade segment 60. The connecting device 76, particularly a wire rope, is fastened to the second joint portion 72 of the further blade segment 70 at an attachment point 78 of the further blade segment 70. In particular, the attachment point 78 is arranged at a root-side end of the second joint portion 62.

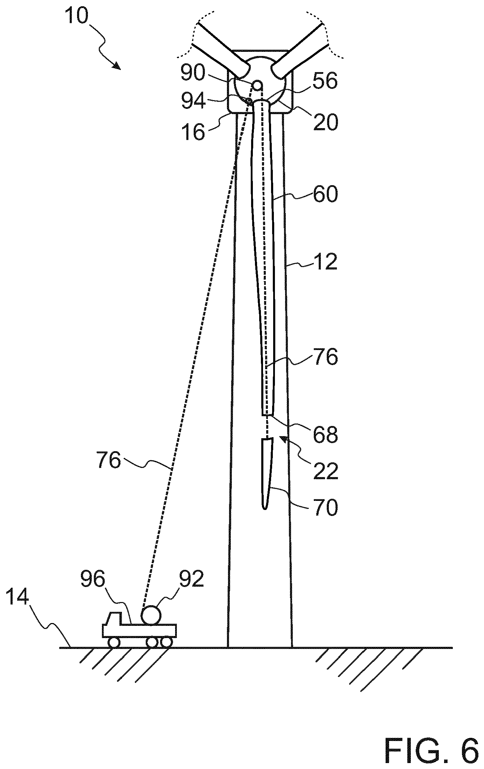

According to embodiments, the connecting device 76 may be used to pull up or lower the further blade segment 70. For example, the connecting device 76 may be extended or retracted using a winch 92. The winch may be arranged, e.g., in the rotor hub 20. Alternatively, the connecting device 76 may be diverted to another position using a diverter pulley, e.g., to a winch positioned in the nacelle 16 or to a winch 92 positioned on the ground 14. For example, FIG. 6 shows a wind turbine 10 with a blade segment 60 mounted to the rotor hub 20. A further blade segment 70, specifically a tip segment, is raised to the extension end 68 of the blade segment 60 by winding the connecting device 76 up on a winch 92, the winch 92 being positioned on a truck 96 on the support surface 14 near the wind turbine 10. In particular, the connecting device 76 extends from the attachment point 78 on the further blade segment 70 through the blade segment 60 into the rotor hub 20, where the connecting device 76 is diverted using a diverter pulley 90 through a hub access hatch 94 to the winch 92 on the truck 96.

In FIG. 4B, the further blade segment 70 has been raised into position for joining with the blade segment 60 by pulling the further blade segment 70 upwards using the connecting device 76, particularly into a position for joining the first joint portion 62 and the second joint portion 72. After joining the blade segment 60 and the further blade segment 70 using the joining device 82, the connecting device 76 remains in the rotor blade 22 (FIG. 4C). Using a connecting device 76 for raising or lowering a further blade segment may provide the advantage that the rotor blade 22 can be assembled and/or disassembled in a fast and reliable manner, particularly without the use of a blade gripper or without using a blade-lifting crane.

Although raising and lowering of the further blade segment has been described as being facilitated by the use of a connecting device 76 as illustrated, e.g., in FIGS. 4A to 5, embodiments of the present disclosure are not limited thereto. For example, rotor blades 22 according to some embodiments may not include a connecting device 76, particularly not a connecting device 76 extending through the blade segment 60. In some embodiments, the further blade segment 70 may be raised or lowered using a crane. For instance, a crane with a blade gripper may be used, the gripper configured for gripping the further blade segment 70 from the outside. In further embodiments, the further blade segment 70 may be raised or lowered using a connecting device attached to the outside of the further blade segment 70. The connecting device may be suspended from the wind turbine 10, e.g., from the rotor hub 20. Remote operation of the joining device 82 according to embodiments described herein may advantageously be used to dispense with manual intervention by personnel in a difficult to access joint region of the rotor blade 22, while the rotor blade 22 is assembled or disassembled using a crane or using an exterior connecting device.

According to embodiments of the present disclosure, a method of assembling or disassembling a rotor blade 22 of a wind turbine 10 is provided. The wind turbine 10 and/or the rotor blade 22 of the wind turbine 10 may include any of the features according to embodiments described herein. In particular, the rotor blade 22 includes a blade segment 60 and a further blade segment 70. The further blade segment 70 may be configured for joining to the blade segment 60 such that the further blade segment70 extends from the blade segment 60 towards a blade tip 54 of the rotor blade 22.

In embodiments, the method includes connecting the first joint portion 62 and the second joint portion 72 by remotely operating the joining device 82, particularly for assembling the rotor blade 22. In some embodiments, the joining device 82 may include an actuator 84 and a fastening device 86 according to embodiments described herein. Connecting the first joint portion 62 and the second joint portion 72 may include actuating the fastening device 86 from a released state to a locked state using the actuator 84.

In some embodiments, the method includes releasing the second joint portion 72 from the first joint portion 62 by remotely operating the joining device 82, particularly for disassembling the rotor blade 22. According to embodiments, releasing the second joint portion 72 from the first joint portion 62 includes actuating the fastening device 86 from a locked state to a released state using the actuator 84.

In some embodiments, remotely operating the joining device 82 may include transmitting actuation energy to the joining device 82, particularly to the actuator 84. In particular, the actuation energy may be transmitted to the actuator 84 for actuating the fastening device 86 from a locked state to a released state or vice versa. For example, actuation energy may be transmitted via a remote operation line 87 or an actuator line 88 according to embodiments described herein.

According to embodiments, the blade segment 60 is connected to the rotor hub 20 at a root 56 of the blade segment 60, particularly during assembling or disassembling of the rotor blade 22. The first joint portion 62 may be arranged at an extension end 68 of the blade segment 60, the extension end 68 being at the end opposite the root 56. The method may include raising the further blade segment 70 towards the blade segment 60 before connecting the first joint portion 62 and the second joint portion 72. Raising the further blade segment 70 may include raising the further blade segment 70 from a ground or from a support surface 14 below the blade segment 60 to an extension end 68 of the blade segment 60. Raising the further blade segment 70 may include positioning the further blade segment 70 relative to the blade segment 60 into a position for joining the first j oint portion 62 and the second joint portion 72. For example, positioning the further blade segment 70 may include inserting a structural member of the second joint portion 72 into a receptacle of the first joint portion 62.

In some embodiments, the method may include lowering the further blade segment 70 from the blade segment 60 after releasing the second joint portion 72 from the first joint portion 62. Lowering the further blade segment 70 may include lowering the further blade segment 70 to a ground or a support surface 14 below the blade segment 60.

According to some embodiments, raising or lowering the further blade segment 70 includes raising or lowering the further blade segment 70 using a connecting device 76 fastened to the further blade segment 70. The connecting device 76 may be suspended from the wind turbine 10, particularly according to embodiments described herein. For example, the connecting device 76 may extend through the blade segment 60. In some embodiments, the connecting device may be routed outside the blade segment 60. In further embodiments, raising or lowering the further blade segment 70 may be performed using a crane, particularly using a crane and a blade gripper.

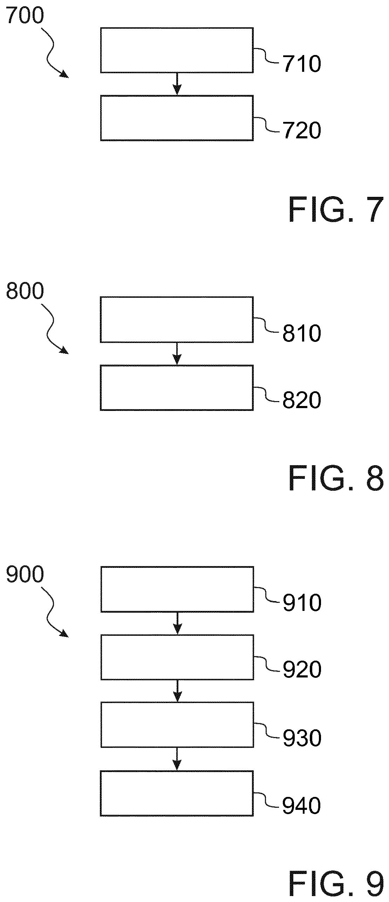

For example, FIGS. 7 and 8 illustrate flow diagrams of methods according to embodiments of the present disclosure. More specifically, FIG. 7 illustrates a method 700 of disassembling a rotor blade 22. The method 700 includes releasing (block 710) the second joint portion 72 from the first j oint portion 62, and lowering (block 720) the further blade segment 70 from the blade segment 60 according to embodiments described herein. FIG. 8 illustrates a method 800 of assembling a rotor blade 22. The method 800 includes raising (block 810) the further blade segment 70 towards the blade segment 60, and connecting (block 820) the first joint portion 62 and the second joint portion 72 according to embodiments described herein.

According to embodiments of the present disclosure, methods of disassembling a rotor blade 22 and of assembling a rotor blade 22 described herein may be combined to a method of replacing a further blade segment 70 of a rotor blade 22. The method of replacing the further blade segment 70 may particularly include a method of disassembling a rotor blade 22 according embodiments of the present disclosure. For example, FIG. 9 illustrates a flow diagram of a method 900 of replacing the further blade segment 70. The method 900 may include releasing (block 910) the second joint portion 72 from the first joint portion 62 by remotely operating the joining device 82. The method 900 may further include lowering (block 920) the further blade segment 70 from the blade segment 60 after releasing the second joint portion 72 from the first joint portion 62, particularly lowering the further blade segment 70 to the ground.

After lowering the further blade segment 70 to the ground, the further blade segment 70 may be repaired or serviced on site near the wind turbine 10 or may be transported to a maintenance station and returned to the wind turbine 10 after repair or service. Alternatively, the further blade segment 70 may be exchanged for a substitute further blade segment. According to some embodiments, the substitute further blade segment may have the same length and/or shape as the further blade segment 70. In further embodiments, the substitute further blade segment may be different from the further blade segment 70. For example, the substitute further blade segment may have a different length and/or different shape with respect to the further blade segment 70, particularly a different shape of the blade tip. After the repair or exchange of the further blade segment 70, the method 900 may proceed according to embodiments of a method of assembling a rotor blade 22, but using the repaired further blade segment or the substitute further blade segment instead of the further blade segment 70. In particular, the method 900 may proceed with raising (block 930) the repaired further blade segment or the substitute further blade segment towards the blade segment 60. Further, the method 900 may include connecting (block 940) the first j oint portion 62 of the blade segment 60 and a second j oint portion of the repaired or substitute further blade segment by remotely operating the joining device 82.

In some embodiments, the further blade segment may be replaced at least once every two years, particularly at least once a year or at least twice a year. For example, the further blade segment may be exchanged for blade repair, blade servicing and/or to provide seasonal or site adaptations. For example, embodiments may advantageously enable adaptations of a rotor diameter and/or a tip shape to seasonal conditions or site conditions.

Embodiments of the present disclosure may provide the advantage that a segmented rotor blade can be assembled or disassembled using remote operation. More specifically, the rotor blade may be assembled or disassembled without intervention by personnel at the joint location, particularly if a blade segment is already mounted to the rotor hub. In particular, assembly or disassembly may be performed without using a crane, a man basket, an aerial work platform, rope access or climbing technicians at the location of the blade joint. Environmental, health and safety hazards associated with blade lifting and tip exchange may be reduced, e.g., risks from falling objects, risks of personnel falling from heights, risks from vibrations of the blade tip due to wind, or risks from high forces resulting from the wind. Embodiments of the disclosure may allow for reducing or avoiding costs associated with waiting times due to high wind speeds and/or costs for crane usage or for rope climbers. An assembly and/or disassembly of a rotor blade may be provided in a safe, fast and/or cost-efficient manner. Embodiments of the present disclosure may enable more regular servicing of blade segments, particularly of tip segments.

This written description uses examples to disclose the invention, including the best mode, and also to enable any person skilled in the art to practice the invention, including making and using any devices or systems and performing any incorporated methods. The scope is defined by the appended claims, and may include other examples that occur to those skilled in the art.

## Claims

1. A blade segment (60) for a rotor blade (22) of a wind turbine (10), the blade segment (60) comprising
- a first j oint portion (62) configured to be joined to a second j oint portion (72) of a further blade segment (70); and
- a blade joining system comprising a joining device (82) for mechanically connecting the first joint portion (62) and the second joint portion (72), the joining device (82) being remotely operable such that the joining device (82) mechanically connects the first joint portion (62) and the second joint portion (72) for joining the blade segment (60) and the further blade segment (70).

2. The blade segment (60) of claim 1, wherein the joining device (82) comprises an actuator (84) and a fastening device (86), the actuator (84) being configured for actuating the fastening device (86) for connecting the first joint portion (62) and the second joint portion (72) and/or for releasing the second joint portion (72) from the first joint portion (62).

3. The blade segment (60) of claim 2, wherein the actuator (84) is configured for inserting the fastening device (86) into at least one first aperture (64) of the first joint portion (62) and/or into at least one second aperture (74) of the second joint portion (72).

4. The blade segment (60) of any one of claims 2 and 3, wherein the actuator (84) comprises at least one of a hydraulic actuator, a pneumatic actuator, an electric actuator or a mechanical actuator.

5. The blade segment (60) of any one of claims 2 to 4, wherein the blade joining system comprises an actuator line (88) connected to the actuator (84), the actuator line (88) being configured for transmitting actuation energy to the actuator (84) for actuating the fastening device (86).

6. The blade segment (60) of claim 5, wherein the blade segment (60) comprises a root (56) configured to be connected to a rotor hub (20) of the wind turbine (10), and wherein the actuator line (88) extends along a longitudinal axis of the blade segment (60) from the actuator (84) at least to the root (56) of the blade segment (60).

7. The blade segment (60) of any one of claims 1 to 6, wherein the joining device (82) is remotely operable from outside a joint region of the blade segment (60), the joint region comprising the first joint portion (62) and the joining device (82).

8. The blade segment (60) of any one of claims 2 to 7, wherein the actuator (84) is arranged at least partially within an outer shell (52) of the blade segment (60), particularly fully within the outer shell (52); or wherein the actuator (84) is installed onto the outer shell (52) of the blade segment (60).

9. The blade segment (60) of any one of claims 1 to 8, wherein the blade segment (60) comprises a root (56) configured to be connected to a rotor hub (20) of the wind turbine (10), and wherein the first joint portion (62) is arranged at an extension end (68) of the blade segment (60) opposite the root (56).

10. A rotor blade (22) for a wind turbine (10), the rotor blade (22) having at least two blade segments comprising:
- the blade segment (60) of any one of claims 1 to 9; and
- the further blade segment (70) comprising the second joint portion (72), the second j oint portion (72) being configured to be joined to the first joint portion (62) of the blade segment (60).

11. A wind turbine (10) comprising a rotor (18), the rotor (18) comprising
- a rotor hub (20); and
- at least one rotor blade (22) according to claim 10, the rotor blade (22) being connected to the rotor hub (20).

12. A method (700,800) of assembling or disassembling a rotor blade (22) according to claim 10, the method (700,800) comprising
- connecting the first joint portion (62) and the second joint portion (72) by remotely operating the joining device (82), or releasing the second joint portion (72) from the first joint portion (62) by remotely operating the joining device (82).

13. The method (700,800) of claim 12, wherein the joining device (82) comprises an actuator (84) and a fastening device (86), wherein connecting the first joint portion (62) and the second joint portion (72) comprises actuating the fastening device (86) from a released state to a locked state using the actuator (84), or wherein releasing the second joint portion (72) from the first joint portion (62) comprises actuating the fastening device (86) from a locked state to a released state using the actuator (84).

14. The method (700,800) of any one of claims 12 and 13, wherein the blade segment (60) is connected to the rotor hub (20) at a root (56) of the blade segment (60), and wherein the first joint portion (62) is arranged at an extension end (68) of the blade segment (60) opposite the root (56); the method (700,800) further comprising
- raising the further blade segment (70) towards the blade segment (60) before connecting the first joint portion (62) and the second joint portion (72), or lowering the further blade segment (70) from the blade segment (60) after releasing the second joint portion (72) from the first joint portion (62).

15. The method (700,800) of claim 14, wherein raising or lowering the further blade segment (70) comprises raising or lowering the further blade segment (70) using a connecting device (76) fastened to the further blade segment (70), the connecting device (76) being suspended from the wind turbine (10).

## Patentansprüche

1. Blattsegment (60) für ein Rotorblatt (22) einer Windenergieanlage (10), wobei das Blattsegment (60) Folgendes umfasst:
- einen ersten Verbindungsabschnitt (62), der dazu ausgebildet ist, mit einem zweiten Verbindungsabschnitt (72) eines weiteren Blattsegments (70) verbunden zu werden; und
- ein Blattverbindungssystem, das eine Verbindungsvorrichtung (82) zum mechanischen Verbinden des ersten Verbindungsabschnitts (62) und des zweiten Verbindungsabschnitts (72) umfasst, wobei die Verbindungsvorrichtung (82) derart fernbedienbar ist, dass die Verbindungsvorrichtung (82) den ersten Verbindungsabschnitt (62) und den zweiten Verbindungsabschnitt (72) zum Zusammenfügen des Blattsegments (60) und des weiteren Blattsegments (70) mechanisch verbindet.

2. Blattsegment (60) nach Anspruch 1, wobei die Verbindungsvorrichtung (82) einen Aktor (84) und eine Befestigungsvorrichtung (86) umfasst, wobei der Aktor (84) dazu ausgebildet ist, die Befestigungsvorrichtung (86) zum Verbinden des ersten Verbindungsabschnitts (62) und des zweiten Verbindungsabschnitts (72) und/oder zum Lösen des zweiten Verbindungsabschnitts (72) von dem ersten Verbindungsabschnitt (62) zu betätigen.

3. Blattsegment (60) nach Anspruch 2, wobei der Aktor (84) zum Einführen der Befestigungsvorrichtung (86) in zumindest eine erste Öffnung (64) des ersten Verbindungsabschnitts (62) und/oder in zumindest eine zweite Öffnung (74) des zweiten Verbindungsabschnitts (72) ausgebildet ist.

4. Blattsegment (60) nach einem der Ansprüche 2 und 3, wobei der Aktor (84) mindestens einen von einem hydraulischen Aktor, einem pneumatischen Aktor, einem elektrischen Aktor oder einem mechanischen Aktor umfasst.

5. Blattsegment (60) nach einem der Ansprüche 2 bis 4, wobei das Blattverbindungssystem eine mit dem Aktor (84) verbundene Aktorleitung (88) umfasst, wobei die Aktorleitung (88) zum Übertragen von Betätigungsenergie an den Aktor (84) zum Betätigen der Befestigungsvorrichtung (86) ausgebildet ist.

6. Blattsegment (60) nach Anspruch 5, wobei das Blattsegment (60) eine Wurzel (56) umfasst, die dazu ausgebildet ist, mit einer Rotornabe (20) der Windenergieanlage (10) verbunden zu werden, und wobei sich die Aktorleitung (88) entlang einer Längsachse des Blattsegments (60) von dem Aktor (84) zumindest bis zu der Wurzel (56) des Blattsegments (60) erstreckt.

7. Blattsegment (60) nach einem der Ansprüche 1 bis 6, wobei die Verbindungsvorrichtung (82) von außerhalb eines Verbindungsbereichs des Blattsegments (60) fernbedienbar ist, wobei der Verbindungsbereich den ersten Verbindungsabschnitt (62) und die Verbindungsvorrichtung (82) umfasst.

8. Blattsegment (60) nach einem der Ansprüche 2 bis 7, wobei der Aktor (84) zumindest teilweise innerhalb einer Außenschale (52) des Blattsegments (60) angeordnet ist, insbesondere vollständig innerhalb der Außenschale (52); oder wobei der Aktor (84) auf der Außenschale (52) des Blattsegments (60) installiert ist.

9. Blattsegment (60) nach einem der Ansprüche 1 bis 8, wobei das Blattsegment (60) eine Wurzel (56) umfasst, die dazu ausgebildet ist, mit einer Rotornabe (20) der Windenergieanlage (10) verbunden zu werden, und wobei der erste Verbindungsabschnitt (62) an einem Erstreckungsende (68) des Blattsegments (60) der Wurzel (56) gegenüberliegend angeordnet ist.

10. Rotorblatt (22) für eine Windenergieanlage (10), wobei das Rotorblatt (22) mindestens zwei Blattsegmente aufweist, umfassend:
- das Blattsegment (60) nach einem der Ansprüche 1 bis 9; und
- das weitere Blattsegment (70), das den zweiten Verbindungsabschnitt (72) umfasst, wobei der zweite Verbindungsabschnitt (72) dazu ausgebildet ist, mit dem ersten Verbindungsabschnitt (62) des Blattsegments (60) zusammengefügt zu werden.

11. Windenergieanlage (10), umfassend einen Rotor (18), wobei der Rotor (18) Folgendes umfasst:
- eine Rotornabe (20); und
- mindestens ein Rotorblatt (22) nach Anspruch 10, wobei das Rotorblatt (22) mit der Rotornabe (20) verbunden ist.

12. Verfahren (700, 800) zum Montieren oder Demontieren eines Rotorblatts (22) nach Anspruch 10, wobei das Verfahren (700, 800) Folgendes umfasst:
- Verbinden des ersten Verbindungsabschnitts (62) und des zweiten Verbindungsabschnitts (72) durch Fernbedienen der Verbindungsvorrichtung (82), oder Lösen des zweiten Verbindungsabschnitts (72) von dem ersten Verbindungsabschnitt (62) durch Fernbedienen der Verbindungsvorrichtung (82).

13. Verfahren (700, 800) nach Anspruch 12, wobei die Verbindungsvorrichtung (82) einen Aktor (84) und eine Befestigungsvorrichtung (86) umfasst, wobei das Verbinden des ersten Verbindungsabschnitts (62) und des zweiten Verbindungsabschnitts (72) das Betätigen der Befestigungsvorrichtung (86) von einem gelösten Zustand in einen verriegelten Zustand unter Verwendung des Aktors (84) umfasst, oder wobei das Lösen des zweiten Verbindungsabschnitts (72) von dem ersten Verbindungsabschnitt (62) das Betätigen der Befestigungsvorrichtung (86) von einem verriegelten Zustand in einen gelösten Zustand unter Verwendung des Aktors (84) umfasst.

14. Verfahren (700, 800) nach einem der Ansprüche 12 und 13, wobei das Blattsegment (60) an einer Wurzel (56) des Blattsegments (60) mit der Rotornabe (20) verbunden ist, und wobei der erste Verbindungsabschnitt (62) an einem Erstreckungsende (68) des Blattsegments (60) der Wurzel (56) gegenüberliegend angeordnet ist; wobei das Verfahren (700, 800) ferner Folgendes umfasst:
- Anheben des weiteren Blattsegments (70) in Richtung des Blattsegments (60) vor dem Verbinden des ersten Verbindungsabschnitts (62) und des zweiten Verbindungsabschnitts (72), oder Absenken des weiteren Blattsegments (70) von dem Blattsegment (60) nach dem Lösen des zweiten Verbindungsabschnitts (72) von dem ersten Verbindungsabschnitt (62).

15. Verfahren (700, 800) nach Anspruch 14, wobei das Anheben oder Absenken des weiteren Blattsegments (70) das Anheben oder Absenken des weiteren Blattsegments (70) unter Verwendung einer an dem weiteren Blattsegment (70) befestigten Verbindungseinrichtung (76) umfasst, wobei die Verbindungseinrichtung (76) an der Windenergieanlage (10) aufgehängt ist.

## Revendications

1. Segment de pale (60) pour une pale de rotor (22) d'une éolienne (10), le segment de pale (60) comprenant
- une première partie de joint (62) conçue pour être jointe à une seconde partie de joint (72) d'un segment de pale (70) supplémentaire ; et
- un système de jonction de pales comprenant un dispositif de jonction (82) pour raccorder mécaniquement la première partie de joint (62) et la seconde partie de joint (72), le dispositif de jonction (82) pouvant être actionné à distance de telle sorte que le dispositif de jonction (82) raccorde mécaniquement la première partie de joint (62) et la seconde partie de joint (72) pour joindre le segment de pale (60) et l'autre segment de pale (70).

2. Segment de pale (60) selon la revendication 1, dans lequel le dispositif de jonction (82) comprend un actionneur (84) et un dispositif de fixation (86), l'actionneur (84) étant conçu pour actionner le dispositif de fixation (86) afin de raccorder la première partie de joint (62) et la seconde partie de joint (72) et/ou pour libérer la seconde partie de joint (72) de la première partie de joint (62).

3. Segment de pale (60) selon la revendication 2, dans lequel l'actionneur (84) est conçu pour insérer le dispositif de fixation (86) dans au moins une première ouverture (64) de la première partie de joint (62) et/ou dans au moins une seconde ouverture (74) de la seconde partie de joint (72).

4. Segment de pale (60) selon l'une quelconque des revendications 2 et 3, dans lequel l'actionneur (84) comprend au moins l'un parmi un actionneur hydraulique, un actionneur pneumatique, un actionneur électrique ou un actionneur mécanique.

5. Segment de pale (60) selon l'une quelconque des revendications 2 à 4, dans lequel le système de jonction de pales comprend une ligne d'actionnement (88) raccordée à l'actionneur (84), la ligne d'actionnement (88) étant conçue pour transmettre une énergie d'actionnement à l'actionneur (84) pour actionner le dispositif de fixation (86).

6. Segment de pale (60) selon la revendication 5, dans lequel le segment de pale (60) comprend une emplanture (56) conçue pour être raccordée à un moyeu de rotor (20) de l'éolienne (10), et dans lequel la ligne d'actionnement (88) s'étend le long d'un axe longitudinal du segment de pale (60) à partir de l'actionneur (84) au moins jusqu'à l'emplanture (56) du segment de pale (60).

7. Segment de pale (60) selon l'une quelconque des revendications 1 à 6, dans lequel le dispositif de jonction (82) peut être actionné à distance à partir de l'extérieur d'une région de joint du segment de pale (60), la région de joint comprenant la première partie de joint (62) et le dispositif de jonction (82).

8. Segment de pale (60) selon l'une quelconque des revendications 2 à 7, dans lequel l'actionneur (84) est agencé au moins partiellement à l'intérieur d'une enveloppe externe (52) du segment de pale (60), en particulier entièrement à l'intérieur de l'enveloppe externe (52) ; ou dans lequel l'actionneur (84) est installé sur l'enveloppe externe (52) du segment de pale (60).

9. Segment de pale (60) selon l'une quelconque des revendications 1 à 8, dans lequel le segment de pale (60) comprend une emplanture (56) conçue pour être raccordée à un moyeu de rotor (20) de l'éolienne (10), et dans lequel la première partie de joint (62) est agencée au niveau d'une extrémité d'extension (68) du segment de pale (60) opposée à l'emplanture (56).

10. Pale de rotor (22) pour une éolienne (10), la pale de rotor (22) ayant au moins deux segments de pale comprenant :
- le segment de pale (60) selon l'une quelconque des revendications 1 à 9 ; et
- l'autre segment de pale (70) comprenant la seconde partie de joint (72), la seconde partie de joint (72) étant conçue pour être jointe à la première partie de joint (62) du segment de pale (60).

11. Éolienne (10) comprenant un rotor (18), le rotor (18) comprenant
- un moyeu de rotor (20) ; et
- au moins une pale de rotor (22) selon la revendication 10, la pale de rotor (22) étant raccordée au moyeu de rotor (20).

12. Procédé (700, 800) de montage ou de démontage d'une pale de rotor (22) selon la revendication 10, le procédé (700, 800) comprenant
- le raccordement de la première partie de joint (62) et la seconde partie de joint (72) en actionnant à distance le dispositif de jonction (82), ou la libération de la seconde partie de joint (72) de la première partie de joint (62) en actionnant à distance le dispositif de jonction (82).

13. Procédé (700, 800) selon la revendication 12, dans lequel le dispositif de jonction (82) comprend un actionneur (84) et un dispositif de fixation (86), dans lequel le raccordement de la première partie de joint (62) et de la seconde partie de joint (72) comprend l'actionnement du dispositif de fixation (86) d'un état libéré à un état verrouillé à l'aide de l'actionneur (84), ou dans lequel la libération de la seconde partie de joint (72) de la première partie de joint (62) comprend l'actionnement du dispositif de fixation (86) d'un état verrouillé à un état libéré à l'aide de l'actionneur (84).

14. Procédé (700, 800) selon l'une quelconque des revendications 12 et 13, dans lequel le segment de pale (60) est raccordé au moyeu de rotor (20) au niveau d'une emplanture (56) du segment de pale (60), et dans lequel la première partie de joint (62) est agencée au niveau d'une extrémité d'extension (68) du segment de pale (60) opposée à l'emplanture (56) ; le procédé (700, 800) comprenant en outre
- le levage de l'autre segment de pale (70) vers le segment de pale (60) avant de raccorder la première partie de joint (62) et la seconde partie de joint (72), ou l'abaissement de l'autre segment de pale (70) du segment de pale (60) après avoir libéré la seconde partie de joint (72) de la première partie de joint (62).

15. Procédé (700, 800) selon la revendication 14, dans lequel le levage ou l'abaissement de l'autre segment de pale (70) comprend le levage ou l'abaissement de l'autre segment de pale (70) à l'aide d'un dispositif de raccordement (76) fixé à l'autre segment de pale (70), le dispositif de raccordement (76) étant suspendu à l'éolienne (10).
